# EUROPEAN PATENT SPECIFICATION

(11) **EP 2 532 401 B1**
(45) Date of publication and mention of the grant of the patent: **30.04.2014**
(21) Application number: 11169017.8
(22) Date of filing: 07.06.2011
(51) Int. Cl.: B01D 1/00, B01D 1/28, B01D 3/00, C02F 1/04, C02F 1/14

(54) **Water Purification System**
Wasseraufbereitungssystem
Système de purification d'eau

(43) Date of publication of application: 12.12.2012
(73) Proprietor: International For Energy Technology Industries L.L.C, Abu Dhabi (AE)
(72) Inventor: Al-Maaitah, Ayman, 11953 Amman (JO); Nedea Abdulelah Majali, Amman (JO); Feras Saad Batainah, Amman (JO)
(74) Representative: Hyden, Martin Douglas

(56) References cited:
- EP-A1- 1 312 404
- WO-A1-2007/128062
- WO-A1-2010/096863
- GB-A- 2 035 813
- US-A- 4 402 795
- US-A- 5 932 074
- US-A- 5 943 879
- US-A1- 2010 258 426

## Description

### Field of the Invention

This invention relates to water purification systems. In particular, it relates to such systems that use distillation to separate water and impurities or contaminants.

### Background and Prior Art

Distillation has been used to purify water (and other liquids) for many years. Water is heated until it boils and the vapor is subsequently condensed back into a liquid state. Because the impurities or contaminants are non-volatile, or have a boiling point that is higher than that of water, condensation of the resulting vapor provides water that is free of these impurities. One particular example of such a technique is for the desalination of seawater or brines to provide potable water.

A large part of the energy that is put into the water to boil it is typically lost on condensation.

The following are examples of techniques for water purification or desalination: US4269663, US5591310, US5599429, US4421606, US4373996, US4475988, US5645693, US20040026225, US5614066, US20050161166, US7501046, US20090145737, US5112446, US5770020, US6355144, US4004984, US20030173204, US5814224, US3883400, US20060157338, US4671856, US5512141, US7127894, US20090025399, US3514375, US3901767, US4555307, US5587054, US4822455, US3637465, US6804962, US5672250, US4504362, US5331824.

This invention addresses the efficiency of the distillation system.

### Summary of the Invention

One aspect of this invention provides a distillation system comprising: an evaporator section for holding a source liquid to be distilled and including a first heat exchanger arranged to heat the source liquid; a condenser section for receiving vapor from the evaporator section and condensing it to form a liquid distillate and including a second heat exchanger arranged to cool the vapor; and a heat exchange system comprising the first and second heat exchangers connected by means of a fluid circuit containing a working fluid that circulates between the first and second heat exchangers, the fluid circuit further comprising a compressor for compressing fluid passing from the second heat exchanger to the first heat exchanger, and a throttle valve limiting flow between the first heat exchanger and the second heat exchanger.

In one embodiment, the compressor comprises first and second heat exchange chambers, each chamber including an inlet and outlet for the working fluid in the fluid circuit, and a chamber heat exchanger connected to a supply of temperature-controlled fluid.

The system can further comprise a fluid buffer into connected to the outlets from the heat exchange chambers and from which working passes to the condenser.

Non-return valves can be provided in the inlet and outlet of each chamber. In one embodiment, the non-return valves are configured such that working fluid is prevented from passing directly from the compressor to the second heat exchanger, and from passing directly from the first heat exchanger to the compressor.

The supply of temperature-controlled fluid for each chamber can comprise valves switchable between a high temperature supply and a low temperature supply. Controls can also be provided to switch between a first configuration in which the supply of temperature-controlled fluid provides a high temperature supply to the first chamber and a low temperature supply to the second chamber; and a second configuration in which the supply of temperature-controlled fluid provides a low temperature supply to the first chamber and a high temperature supply to the second chamber.

A valve can be provided in the fluid circuit operable to regulate flow of the working fluid.

The chambers can include pressure sensors, outputs from which can used to control operation of the valve, and/or humidity sensors for detecting vapor near its condensation point.

A heater can be provided for pre-heating the source liquid and fluid in the supply of temperature-controlled fluid provided to the chambers. The heater can comprise a solar heating matrix and/or a waste heat converter that utilizes heat produced by the system.

Another aspect of the invention provides a method of operating a distillation system, comprising: (a) configuring the system in the first configuration; heating the working fluid in the first chamber to cause it to expand and pass via the condenser and throttle valve to the evaporator; cooling the working fluid in the second chamber to cause it to contract such that working fluid is drawn from the evaporator into the second chamber; (b) monitoring the fluid in the second chamber to detect the onset of condensation of the working fluid; (c) on detecting the onset of condensation, configuring the system in the second configuration; heating the working fluid in the second chamber to cause it to expand and pass via the condenser and throttle valve to the evaporator; cooling the working fluid in the first chamber to cause it to contract such that working fluid is drawn from the evaporator into the first chamber; (d) monitoring the fluid in the first chamber to detect the onset of condensation of the working fluid; and (e) on detecting the onset of condensation, configuring the system in the first configuration.

One embodiment of the method comprises repeating steps (b)-(e) after step (e).

Further aspects of the invention will be apparent from the drawings and detailed description.

### Brief Description of the Drawings

Figure 1 shows a distillation system according to an embodiment of the invention;
Figure 2 shows a fluid circuit including a thermal compressor in accordance with an embodiment of the invention ;
Figure 3 shows the embodiment of Figure 2 in a first configuration; and
Figure 4 shows the embodiment of Figure 2 in a second configuration.

### Detailed Description

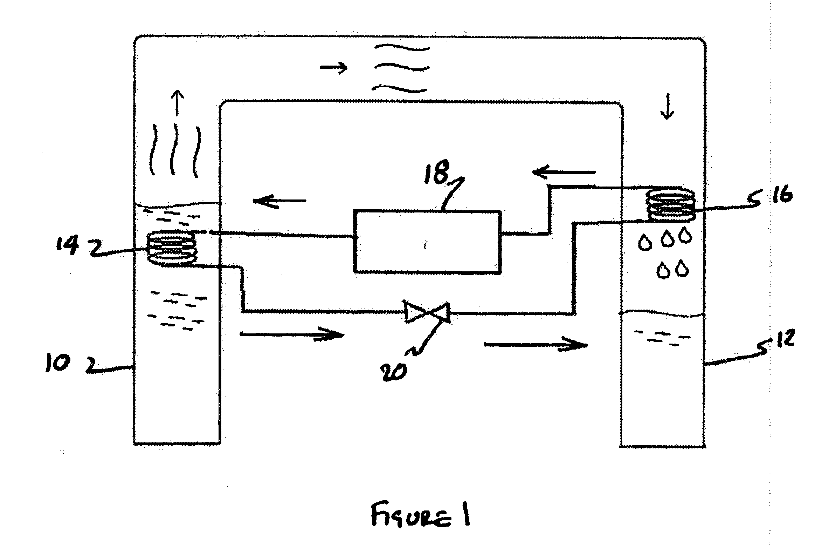

Figure 1 shows a distillation system according to an embodiment of the invention, comprising an evaporator section 10 which contains the source liquid to be distilled, such as sea water or other brines, polluted water, or the like; and a condenser section 12 for condensing the vapor formed in the evaporator section 10 and collecting the distillate. A heating element in the form of a first heat exchanger 14 is positioned in the evaporator section 10 and operates to raise the temperature of the source liquid above its boiling point. A cooling element, in the form of a second heat exchanger 16 is positioned din the condenser section 12 and operates to cool vapor below its condensation point. In the example of Figure 1, the first and second heat exchangers 14, 16 form part of a fluid circuit that circulates a working fluid between the two heat exchangers 14, 16 via a compressor 18 and throttle valve 20. the compressor 18 compresses the working fluid, causing it to heat up. This heat passes from the first heat exchanger 14 into the source fluid to raise its temperature to boiling. The compressed working fluid then passes through the throttle valve 20, the pressure drop across this valve causing the working fluid to expand and cool. The cooled fluid is heated in the second heat exchanger 16 by the vapor in the condenser, the heat lost from the vapor causing it to condense. The working fluid, heated by the vapor passes to the compressor where it is again compressed and heated as before.

In a traditional distillation system, heat transferred into the liquid to evaporate or boil it is lost when the vapor is cooled, making the system inefficient. In the system described above, the heat of condensation is fed back into the fluid circuit prior to heating in the compressor, making the system more efficient.

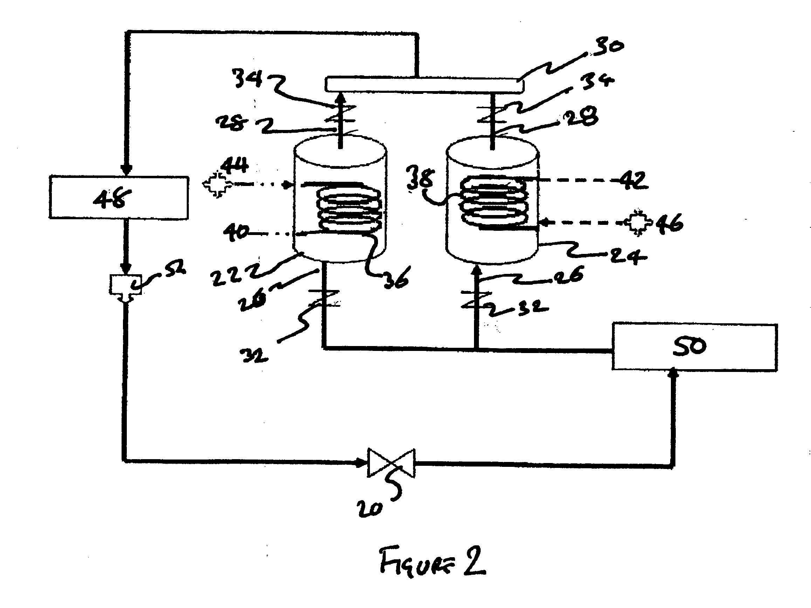

The compressor can be a mechanical compressor operated by a diaphragm or piston and powered by a motor such as an electric motor. However, such systems require 'high grade' energy that involves refining of fuels, conversion of energy using prime movers, complex power distribution, or refined technologies (such as photovoltaic cells). Such systems have their own inefficiencies before the efficiency of the distillation system is addressed. One embodiment of the invention attempt to avoid some or all of these problems by using a thermal compressor. Figure 2 shows one embodiment of a thermal compressor for use in the invention.

The thermal compressor comprises two cylinders 22, 24 defining first and second heat exchange chambers. Each cylinder has an inlet 26 connected to the fluid circuit to admit working fluid to the cylinder, and an outlet and an outlet 28 that allows working fluid to pass to a buffer or accumulator 30 before passing on through the fluid circuit. Non-return valves 32 are provided in the inlets 26 so that fluid passing into the cylinders 22, 24 cannot subsequently return to the fluid circuit via the inlets 26. Non-return valves 34 are also provided in the outlets 28 so that fluid that has exited the cylinders 22, 24 cannot reenter via the outlets 28.

Each cylinder 22, 24 has a respective heat exchanger 36, 38 in the form of a coil connected to a supply 40, 42 of a temperature-controlled fluid. The supply of temperature-controlled fluid 40, 42 includes valves 44, 46 that are operable to admit either a hot or cold fluid to the respective coil 36, 38. A pressure sensor P and humidity sensor H are also provided in each cylinder 22, 24.

The remainder of the fluid circuit corresponds to that shown in Figure 1, with the first heat exchanger constituting a condenser 48 and the second heat exchanger constituting an evaporator 50 (in effect, these heat exchangers have the reverse function of the section of the distillation system in which they reside). A regulator valve, such as a solenoid valve 52 is provided in the fluid circuit to control the flow of working fluid around the circuit.

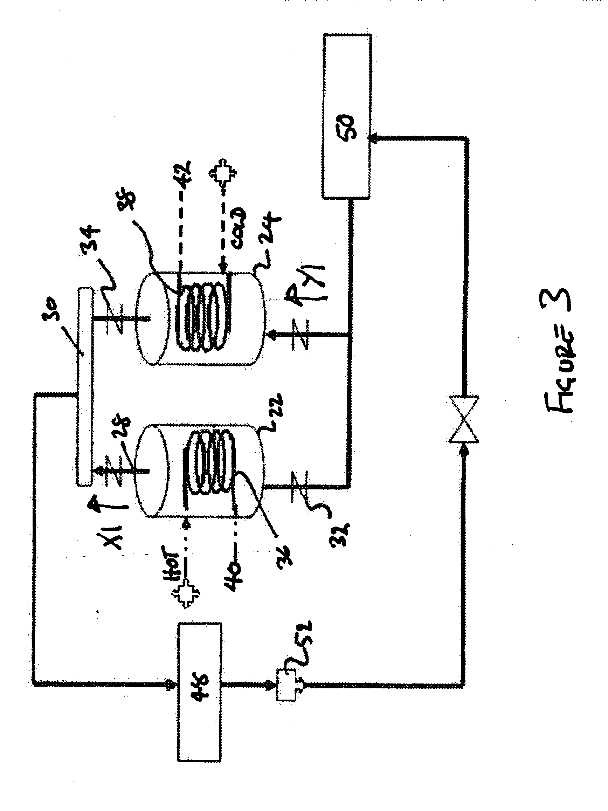

In a first configuration, as shown in Figure 3, the supply 40 to the first coil 36 is switched to hot and the supply 42 to the second coil 38 is switched to cold. The working fluid in the first cylinder 22 expands and passes through the outlet 28 and buffer 30 to the condenser 48 (arrow X1) where it heats the source fluid. The non-return valve 32 prevents working fluid from exiting the first cylinder 22 back into the evaporator 50. The pressure sensor P in the first cylinder 22 provides a single used to control the valve 52 to regulate flow of working fluid around the circuit.

The working fluid in the second cylinder 24 contracts , drawing fluid from the evaporator 50 into the cylinder 24 (arrow Y1). The non-return valve 34 prevent fluid being drawn into the second cylinder from the buffer 30. Again, the output of the pressure transducer can be used to control the valve and ensure that the appropriate pressure is maintained.

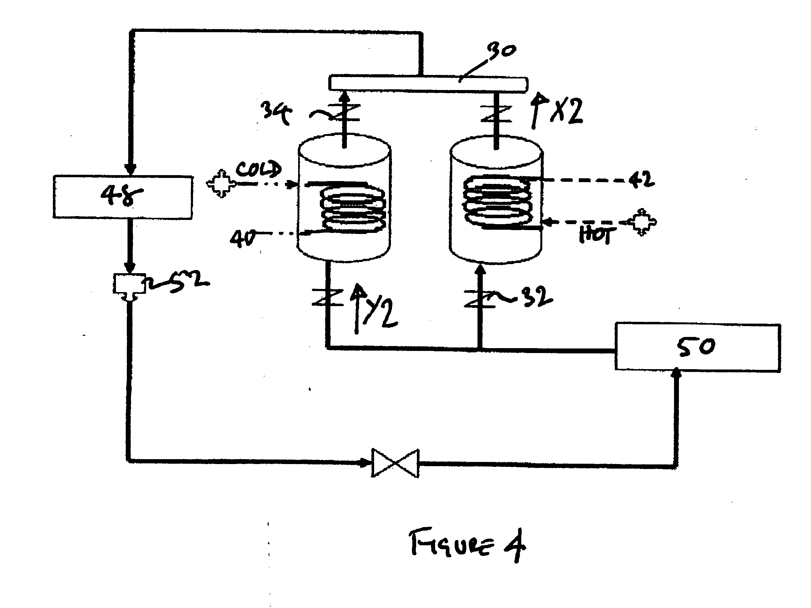

The configuration is maintained until the cylinders are incapable of providing either sufficient pressure to drive the heated working fluid to the condenser 48 and/or condensation is detected by the humidity sensor H in the second cylinder 24. At this point, the valve 52 is closed to maintain the pressure differences and the supplies 40, 42 switched such that the supply 40 is cold and supply 42 is hot. Once the flows of the new supplies are established, the valve 52 is reopened. The system is now in a second configuration. as shown in Figure 4. The working fluid in the second cylinder 24 expands and passes through the outlet 28 and buffer 30 to the condenser 48 (arrow X2) where it heats the source fluid. The non-return valve 32 prevents working fluid from exiting the second cylinder 22 back into the evaporator 50. The working fluid in the first cylinder 22 contracts , drawing fluid from the evaporator 50 into the cylinder 22 (arrow Y2). The non-return valve 34 prevent fluid being drawn into the first cylinder from the buffer 30. Again, the output of the pressure sensors and humidity sensors can be used to control the valve 52 as before. Operation continues until the system is again incapable of further flow, at which time its operation reverts to the first configuration.

The system alternates between the two configurations during operation.

Hot fluid can be provided to the temperature-controlled supply from a number of possible sources, such as solar matrix heaters, or heat exchangers arranged around the system to use heat that would otherwise be wasted.

The working fluid in the fluid circuit can be distilled water under reduced pressure (vacuum). The compressor can raise the temperature to 110°C (or even 120°C) and the pressure to 1.1.bar. Following the throttle valve (expansion valve) the pressure drops to 0.8 bar and the temperature drops to 90°C.

The coefficient of performance for the system using the thermal compressor can exceed 3.5 and reaches up to 8.

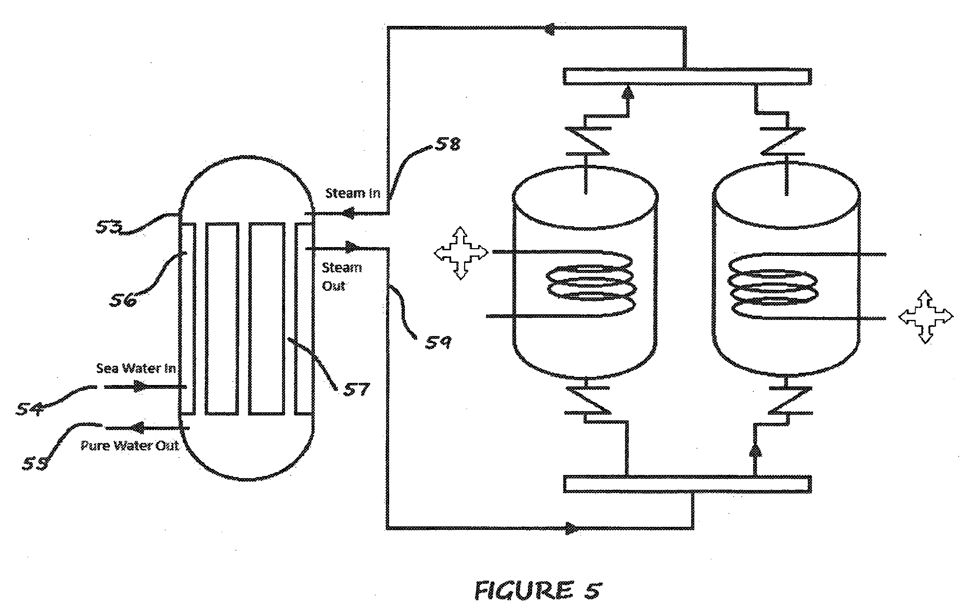

Another embodiment of the invention is described in Figure 5. Figure 5 shows an embodiment of the invention, comprising of a heat exchanger 53, which contains of two sections: an evaporator section 56 to evaporate the incoming fluid 54 and condensation section 57 to condense the compressed vapor 58 of the fluid coming from the thermal compressor. In this system the refrigerant is by itself the distilled water. Water is evaporated in section 56 retains energy from the condensed vapor in section 57.

Other changes can be made to the construction and operation of the system described while staying within the scope of the invention.

## Claims

1. A method of operating a distillation system comprising:
an evaporator section (10) for holding a source liquid to be distilled and including a first heat exchanger (14, 48) arranged to heat the source liquid;
a condenser section (12) for receiving vapor from the evaporator section (10) and condensing it to form a liquid distillate and including a second heat exchanger (16, 50) arranged to cool the vapor; and
a heat exchange system (18) comprising the first heat exchanger (14, 48) and second heat exchanger (15, 50) connected by means of a fluid circuit containing a working fluid that circulates between the first and second heat exchangers, the fluid circuit further comprising a compressor for compressing fluid passing from the second heat exchanger (16, 50) to the first heat exchanger (14, 48), and a throttle valve (20) limiting flow between the first heat exchanger (14, 48) and the second heat exchanger (16, 50), wherein the compressor comprises first and second heat exchange chambers (22, 24) in parallel, each chamber including an inlet (26) and outlet (28) for the working fluid in the fluid circuit, and a chamber heat exchanger (36, 38) connected to a supply of temperature-controlled fluid (40, 42) comprising valves 44, 46) switchable between a high temperature supply and a low temperature supply;
the method comprising:
(a) configuring the system in a first configuration in which the supply (40, 42) of temperature-controlled fluid provides a high temperature supply to the first chamber (22) and a low temperature supply to the second chamber (24);
heating the working fluid in the first chamber (22) to cause it to expand and pass via the first heat exchanger (14, 48) and throttle valve (20) to the second heat exchanger (16, 50);
cooling the working fluid in the second chamber (24) to cause it to contract such that working fluid is drawn from the second heat exchanger (16, 50) into the second chamber (24);
(b) monitoring the fluid in the second chamber (24) to detect the onset of condensation of the working fluid;
(c) on detecting the onset of condensation, configuring the system in a second configuration in which the supply of temperature-controlled fluid (40, 42) provides a low temperature supply to the first chamber (22) and a high temperature supply to the second chamber (24);
heating the working fluid in the second chamber (24) to cause it to expand and pass via first heat exchanger (14, 48) and throttle valve (20) to the second heat exchanger (16, 50);
cooling the working fluid in the first chamber (22) to cause it to contract such that working fluid is drawn from the second heat exchanger (16, 50)into the first chamber (22);
(d) monitoring the fluid in the first chamber (22) to detect the onset of condensation of the working fluid; and
(e) on detecting the onset of condensation, configuring the system in the first configuration.

2. A method as claimed in claim 1, wherein the distillation system further comprises a fluid buffer connected to the outlets from the heat exchange chambers and from which working fluid passes to the first heat exchanger (14, 48).

3. A method as claimed in claim 1 or 2, wherein the distillation system further comprises non-return valves (32, 34) in the inlet (26) and outlet (28) of each chamber (22, 24).

4. A method as claimed in claim 3, comprising configuring the non-return valves (32, 34)such that working fluid is prevented from passing directly from the compressor to the second heat exchange (16, 50)r, and from passing directly from the first heat exchanger (14, 48) to the compressor.

5. A method as claimed in any preceding claim, further comprising regulating flow of the working fluid by operation of a valve (52) in the fluid circuit.

6. A method as claimed in claim 5, wherein the distillation system further comprises pressure sensors in the chambers (22, 24), outputs from the pressure sensors being used to control operation of the valve (52).

7. A method as claimed in claim 5 or 6, further comprising using humidity sensors in the chambers for detecting vapor near its condensation point.

8. A method as claimed in any preceding, further comprising using a heater for preheating the source liquid and the fluid in the supply of temperature-controlled fluid provided to the chambers.

9. A method as claimed in claim 8, wherein the heater comprises a solar heating matrix and/or a waste heat converter that utilizes heat produced by the system.

10. A method as claimed in any preceding claim, comprising repeating steps (b)-(e) after step (e).

## Patentansprüche

1. Verfahren für den Betrieb eines Destillationssystems, umfassend:
einen Verdampferabschnitt (10) zum Speichern einer zu destillierenden Ausgangsflüssigkeit und mit einem ersten Wärmetauscher (14, 48), der so angeordnet ist, dass er die Ausgangsflüssigkeit erhitzt;
einen Kondensatorabschnitt (12) zum Empfangen von Dampf von dem Verdampferabschnitt (10) und zum Kondensieren des Dampfes, so dass ein flüssiges Destillat gebildet wird, und mit einem zweiten Wärmetauscher (16, 50), der so angeordnet ist, dass er den Dampf abkühlt; und
ein Wärmetauschersystem (18), das den ersten Wärmetauscher (14, 48) und den zweiten Wärmetauscher (15, 50) umfasst, die durch einen Fluidkreislauf verbunden sind, der Arbeitsfluid aufweist, das zwischen den ersten und zweiten Wärmetauschern zirkuliert, wobei der Fluidkreislauf ferner einen Kompressor zum Komprimieren von Fluid umfasst, das von dem zweiten Wärmetauscher (16, 50) zu dem ersten Wärmetauscher (14, 48) verläuft, und mit einem Drosselventil (20), das die Strömung zwischen dem ersten Wärmetauscher (14, 48) und dem zweiten Wärmetauscher (16, 50) begrenzt, wobei der Kompressor parallele erste und zweite Wärmetauschkammern (22, 24) umfasst, wobei jede Kammer einen Einlass (26) und einen Auslass (28) für das Arbeitsfluid in dem Fluidkreislauf aufweist, und mit einem Kammerwärmetauscher (36, 38), der mit einer Versorgungseinrichtung für temperaturgeregeltes Fluid (40, 42) verbunden ist, mit Ventilen (44, 46), die zwischen einer Versorgung mit hoher Temperatur und einer Versorgung mit niedriger Temperatur umgeschaltet werden können;
wobei das Verfahren folgendes umfasst:
(a) das Konfigurieren des Systems in einer ersten Konfiguration, in welcher die Versorgungseinrichtung (40, 42) für temperaturgeregeltes Fluid eine Versorgung mit hoher Temperatur an die erste Kammer (22) bereitstellt und eine Versorgung mit niedriger Temperatur an die zweite Kammer (24);
das Erhitzen des Arbeitsfluids in der ersten Kammer (22), um zu bewirken, dass sich dieses ausdehnt und über den ersten Wärmetauscher (14, 48) und das Drosselventil (20) zu dem zweiten Wärmetauscher (16, 50) verläuft;
das Abkühlen des Arbeitsfluids in der zweiten Kammer (24), um zu bewirken, dass sich dieses zusammenzieht, so dass das Arbeitsfluid aus dem zweiten Wärmetauscher (16, 50) in die zweite Kammer (24) gesaugt wird;
(b) das Überwachen des Fluids in de zweiten Kammer (24), um das Einsetzen von Kondensation des Arbeitsfluids zu erkennen;
(c) nach dem Erkennen des Einsetzens von Kondensation, das Konfigurieren des Systems in einer zweiten Konfiguration, in der die Versorgungseinrichtung für temperaturgeregeltes Fluid (40, 42) eine Versorgung mit niedriger Temperatur an die erste Kammer (22) und eine Versorgung mit hoher Temperatur an die zweite Kammer (24) bereitstellt;
das Erhitzen des Arbeitsfluids in der zweiten Kammer (24), um zu bewirken, dass sich dieses ausdehnt und über den ersten Wärmetauscher (14, 48) und das Drosselventil (20) zu dem zweiten Wärmetauscher (16, 50) verläuft;
das Abkühlen des Arbeitsfluids in der ersten Kammer (22), um zu bewirken, dass sich dieses zusammenzieht, so dass das Arbeitsfluid aus dem zweiten Wärmetauscher (16, 50) in die erste Kammer (22) gesaugt wird;
(d) das Überwachen des Fluids in der ersten Kammer (22), um das Einsetzen von Kondensation des Arbeitsfluids zu erkennen; und
(e) nach dem Erkennen des Einsetzens von Kondensation, das Konfigurieren des Systems in einer ersten Konfiguration.

2. Verfahren nach Anspruch 1, wobei das Destillationssystem ferner einen Fluidpuffer umfasst, der mit den Auslässen der Wärmetauscherkammern verbunden ist und aus dem Arbeitsfluid zu dem ersten Wärmetauscher (14, 48) verläuft.

3. Verfahren nach Anspruch 1 oder 2, wobei das Destillationssystem ferner Absperrventile (32, 34) in dem Einlass (26) und dem Auslass (28) jeder Kammer (22, 24) umfasst.

4. Verfahren nach Anspruch 3, umfassend das Konfigurieren der Absperrventile (32, 34), so dass verhindert wird, dass Arbeitsfluid direkt von dem Kompressor zu dem zweiten Wärmetauscher (16, 50) sowie direkt von dem ersten Wärmetauscher (14, 48) zu dem Kompressor verläuft.

5. Verfahren nach einem der vorstehenden Ansprüche, wobei dieses ferner das Regeln der Strömung des Arbeitsfluids durch den Betrieb eines Ventils (52) in dem Fluidkreislauf umfasst.

6. Verfahren nach Anspruch 5, wobei das Destillationssystem ferner Drucksensoren in den Kammer (22, 24) umfasst, wobei die Ausgaben der Drucksensoren zur Regelung des Betriebs des Ventils (52) verwendet werden.

7. Verfahren nach Anspruch 5 oder 6, wobei dieses ferner das Verwenden von Feuchtigkeitssensoren in den Kammern umfasst, um Dampf nahe dessen Kondensationspunkt zu erkennen.

8. Verfahren nach einem der vorstehenden Ansprüche, wobei dieses ferner das Verwenden einer Heizeinrichtung zur Vorerhitzung der Ausgansflüssigkeit und des Fluids in der Versorgungseinrichtung für temperaturgeregeltes Fluid umfasst, dass an die Kammern bereitgestellt wird.

9. Verfahren nach Anspruch 8, wobei die Heizeinrichtung ein Solarheizmatrix und/oder einen Abwärmewandler umfasst, der die durch das System erzeugte Hitze nutzt.

10. Verfahren nach einem der vorstehenden Ansprüche, umfassend das Wiederholen der Schritte (b) - (e) nach Schritt (e).

## Revendications

1. Procédé de fonctionnement d'un système de distillation comprenant :
une section évaporateur (10) destinée à contenir un liquide source à distiller et comprenant un premier échangeur de chaleur (14, 48) conçu pour chauffer le liquide source ;
une section condenseur (12) destinée à recevoir de la vapeur en provenance de la section évaporateur (10) et à la condenser pour former un distillat liquide et comprenant un second échangeur de chaleur (16, 50) conçu pour refroidir la vapeur ; et
un système d'échange de chaleur (18) comprenant le premier échangeur de chaleur (14, 48) et le second échangeur de chaleur (15, 50) reliés au moyen d'un circuit de fluide contenant un fluide de travail qui circule entre les premier et second échangeurs de chaleur, le circuit de fluide comprenant en outre un compresseur pour comprimer le fluide passant du second échangeur de chaleur (16, 50) vers le premier échangeur de chaleur (14, 48), et un robinet d'étranglement (20) limitant le flux entre le premier échangeur de chaleur (14, 48) et le second échangeur de chaleur (16, 50), dans lequel le compresseur comprend des première et seconde chambres d'échange de chaleur (22, 24) en parallèle, chaque chambre comprenant une entrée (26) et une sortie (28) pour le fluide de travail dans le circuit de fluide, et un échangeur de chaleur de chambre (36, 38) relié à une alimentation en fluide à température régulée (40, 42) comprenant des vannes (44, 46) pouvant commuter entre une alimentation haute température et une alimentation basse température ;
le procédé comprenant les étapes consistant à :
(a) configurer le système dans une première configuration dans laquelle l'alimentation (40, 42) en fluide à température régulée fournit une alimentation haute température à la première chambre (22) et une alimentation basse température à la seconde chambre (24) ;
en chauffant le fluide de travail dans la première chambre (22) pour l'amener à se dilater et à passer par l'intermédiaire du premier échangeur de chaleur (14, 48) et du robinet d'étranglement (20) au second échangeur de chaleur (16, 50) ;
en refroidissant le fluide de travail dans la seconde chambre (24) pour l'amener à se contracter de sorte que le fluide de travail est aspiré du second échangeur de chaleur (16, 50) dans la seconde chambre (24) ;
(b) surveiller le fluide dans la seconde chambre (24) pour détecter l'apparition de la condensation du fluide de travail ;
(c) lors de la détection de l'apparition de la condensation, configurer le système dans une seconde configuration dans laquelle l'alimentation en fluide à température régulée (40, 42) fournit une alimentation basse température à la première chambre (22) et une alimentation haute température à la seconde chambre (24) ;
en chauffant le fluide de travail dans la seconde chambre (24) pour l'amener à se dilater et à passer par l'intermédiaire du premier échangeur de chaleur (14, 48) et du robinet d'étranglement (20) au second échangeur de chaleur (16, 50) ;
en refroidissant le fluide de travail dans la première chambre (22) pour l'amener à se contracter de sorte que le fluide de travail est aspiré du second échangeur de chaleur (16, 50) dans la première chambre (22) ;
(d) surveiller le fluide dans la première chambre (22) pour détecter l'apparition de la condensation du fluide de travail ; et
(e) lors de la détection de l'apparition de la condensation, configurer le système dans la première configuration.

2. Procédé selon la revendication 1, dans lequel le système de distillation comprend en outre un tampon de fluide relié aux sorties des chambres d'échange de chaleur et duquel le fluide de travail passe vers le premier échangeur de chaleur (14, 48).

3. Procédé selon la revendication 1 ou 2, dans lequel le système de distillation comprend en outre des clapets anti-retour (32, 34) dans l'entrée (26) et la sortie (28) de chaque chambre (22, 24).

4. Procédé selon la revendication 3, comprenant les étapes consistant à concevoir les clapets anti-retour (32, 34) de sorte que le fluide de travail est empêché de passer directement du compresseur au second échangeur de chaleur (16, 50), et de passer directement du premier échangeur de chaleur (14, 48) au compresseur.

5. Procédé selon l'une quelconque des revendications précédentes, comprenant en outre l'étape consistant à réguler le flux du fluide de travail par l'actionnement d'une vanne (52) dans le circuit de fluide.

6. Procédé selon la revendication 5, dans lequel le système de distillation comprend en outre des capteurs de pression dans les chambres (22, 24), les sorties des capteurs de pression étant utilisées pour réguler le fonctionnement de la vanne (52).

7. Procédé selon la revendication 5 ou 6, comprenant en outre l'étape consistant à utiliser des capteurs d'humidité dans les chambres pour détecter la vapeur près de son point de condensation.

8. Procédé selon l'une quelconque des revendications précédentes, comprenant en outre l'étape consistant à utiliser un dispositif de chauffage pour préchauffer le liquide source et le fluide dans l'alimentation en fluide à température régulée fournie aux chambres.

9. Procédé selon la revendication 8, dans lequel le dispositif de chauffage comprend une matrice de chauffage solaire et/ou un convertisseur de chaleur perdue qui utilise la chaleur produite par le système.

10. Procédé selon l'une quelconque des revendications précédentes, comprenant l'étape consistant à répéter les étapes (b) à (e) après l'étape (e).
